# EUROPEAN PATENT APPLICATION

(11) **EP 4 764 980 A1**
(43) Date of publication of application: **24.06.2026**
(21) Application number: 25220538.0
(22) Date of filing: 03.12.2025
(51) Int. Cl.: G06N 10/80, G06N 10/60

(54) **SHARING OF QUBITS IN A QUANTUM COMPUTING ENVIRONMENT**

(30) Priority: 19.12.2024 US 202418987643
(71) Applicant: Red Hat, LLC, Raleigh, NC 27601 (US)
(72) Inventor: GRIFFIN, Leigh, Raleigh, 27601 (US); COADY, Stephen, Raleigh, 27601 (US)
(74) Representative: Murgitroyd & Company

(57) **Abstract**

A quantum computing system receives a first qubit reservation request from a first quantum service, the first qubit reservation request identifying a first quantity of qubits. A first set of qubits equal in number to the first quantity of qubits is determined based on a qubit data structure that identifies a first plurality of qubits. The qubit data structure is altered to reserve the first set of qubits for the first quantum service. Qubit reservation information that identifies the first set of qubits is sent to the first quantum service.

## Description

### TECHNICAL FIELD

The disclosure is direct to a method executed by a quantum computing system.

### BACKGROUND

Quantum computing utilizes qubits to perform quantum calculations. Qubits are finite resources. As quantum computing continues to increase in popularity and the demand for qubits grows, it will be desirable to effectively manage and schedule quantum services to use qubits.

### SUMMARY

The disclosed examples implement a qubit scheduler that receives requests for qubits from a plurality of quantum services and schedules the quantum services to use the qubits in an efficient manner that reduces idle qubit time and maintains quantum system integrity.

According to a first aspect of the disclosure, there is provided 1. A method, comprising:
receiving, by a quantum computing system that implements a first plurality of qubits, a first qubit reservation request from a first quantum service, the first qubit reservation request identifying a first quantity of qubits;
determining, by the quantum computing system, based on a qubit data structure that identifies the first plurality of qubits, a first set of qubits equal in number to the first quantity of qubits;
altering, by the quantum computing system, the qubit data structure to reserve the first set of qubits for the first quantum service; and
sending, by the quantum computing system to the first quantum service, qubit reservation information that identifies the first set of qubits.

The method may further comprise: prior to altering the qubit data structure to reserve the first set of qubits, determining, by the quantum computing system, based on the qubit data structure, that the first set of qubits is currently reserved for use by a second quantum service; and altering, by the quantum computing system, the qubit data structure to indicate that the first set of qubits is to be reserved for use by the first quantum service subsequent to the use by the second quantum service.

The method may further comprise determining, by the quantum computing system, that the first set of qubits is to be unreserved for use by the second quantum service; wherein altering, by the quantum computing system, the qubit data structure to reserve the first set of qubits for the first quantum service is responsive to determining that the first set of qubits is to be unreserved for use by the second quantum service.

Altering, by the quantum computing system, the qubit data structure to reserve the first set of qubits for the first quantum service may comprise altering, by the quantum computing system, the qubit data structure to include a first quantum service identifier associated with the first quantum service that indicates that each qubit in the first set of qubits is reserved for use by the first quantum service.

The first plurality of qubits may be implemented by a first hardware enclosure and the quantum computing system may further comprise a second hardware enclosure that implements a second plurality of qubits.

The first plurality of qubits may comprise a first qubit type, the second plurality of qubits may comprise a second qubit type, and the first qubit type may be different from the qubit second type.

The method may further comprise determining, by the quantum computing system, that the first qubit reservation request identifies the first qubit type; and in response to determining that the first qubit reservation request identifies the first qubit type, determining the first set of qubits from the first plurality of qubits.

The method may further comprise determining, by the quantum computing system, that the first qubit reservation request identifies a quantum environment characteristic; and in response to determining that the first qubit reservation request identifies the quantum environment characteristic, determining the first set of qubits from the first plurality of qubits. The quantum environment characteristic may comprise a noise threshold or a temperature threshold.

The method may further comprise: prior to altering the qubit data structure to reserve the first set of qubits, determining, by the quantum computing system based on the qubit data structure, that the first quantity of qubits is not currently available; accessing, by the quantum computing system based on the qubit data structure, time duration information that identifies a time that the first set of qubits will be available; and based on the time duration information, altering, by the quantum computing system, the qubit data structure to indicate that the first set of qubits is to be reserved for use by the first quantum service subsequent to use by a second quantum service.

The method may further comprise determining, by the quantum computing system, that the first qubit reservation request identifies a time duration; and altering, by the quantum computing system, the qubit data structure to identify, for each qubit in the first set of qubits, the time duration.

The method may further comprise receiving, by the quantum computing system, a second qubit reservation request from a second quantum service, the second qubit reservation request identifying a second quantity of qubits; determining, by the quantum computing system, based on the qubit data structure, a second set of qubits equal in number to the second quantity of qubits; altering, by the quantum computing system, the qubit data structure to reserve the second set of qubits for the second quantum service; and sending, by the quantum computing system to the second quantum service, qubit reservation information that identifies the second set of qubits.

The method may further comprise receiving, by the first quantum service, the qubit reservation information; and accessing, by the first quantum service, the first set of qubits based, at least in part, on the qubit reservation information.

The method may further comprise determining, by the quantum computing system, that the first set of qubits is to be unreserved for use by the first quantum service; altering, by the quantum computing system, the qubit data structure to indicate that each qubit in the first set of qubits is no longer reserved for the first quantum service; receiving, by the quantum computing system, a second qubit reservation request from the first quantum service, the second qubit reservation request identifying a second quantity of qubits; determining, by the quantum computing system, based on the qubit data structure, a second set of qubits equal in number to the second quantity of qubits; altering, by the quantum computing system, the qubit data structure to reserve the second set of qubits for the first quantum service; and sending, by the quantum computing system to the first quantum service, qubit reservation information that identifies the second set of qubits.

According to a second aspect of the disclosure, there is provided a quantum computing system, comprising:
a memory; and
a processor device coupled to the memory configured to:
   receive a first qubit reservation request from a first quantum service, the first qubit reservation request identifying a first quantity of qubits;
   determine, based on a qubit data structure that identifies a first plurality of qubits, a first set of qubits equal in number to the first quantity of qubits;
   alter the qubit data structure to reserve the first set of qubits for the first quantum service; and
   send, to the first quantum service, qubit reservation information that identifies the first set of qubits.

The processor device may be further configured to: prior to altering the qubit data structure to reserve the first set of qubits, determine, based on the qubit data structure, that the first set of qubits is currently reserved for use by a second quantum service; and alter the qubit data structure to indicate that the first set of qubits is to be reserved for use by the first quantum service subsequent to the use by the second quantum service.

The processor device may be further configured to determine that the first set of qubits is to be unreserved for use by the second quantum service; wherein altering the qubit data structure to reserve the first set of qubits for the first quantum service is responsive to determining that the first set of qubits is to be unreserved for use by the second quantum service.

Altering the qubit data structure to reserve the first set of qubits for the first quantum service may comprise altering the qubit data structure to include a first quantum service identifier associated with the first quantum service that indicates that each qubit in the first set of qubits is reserved for use by the first quantum service.

The first plurality of qubits may be implemented by a first hardware enclosure and the quantum computing system may further comprise a second hardware enclosure that implements a second plurality of qubits.

The first plurality of qubits may comprise a first qubit type, the second plurality of qubits may comprise a second qubit type, and the first qubit type may be different from the qubit second type.

The processor device may be further configured to determine that the first qubit reservation request identifies the first qubit type; and in response to determining that the first qubit reservation request identifies the first qubit type, determine the first set of qubits from the first plurality of qubits.

The processor device may be further configured to determine that the first qubit reservation request identifies a quantum environment characteristic; and in response to determining that the first qubit reservation request identifies the quantum environment characteristic, determine the first set of qubits from the first plurality of qubits. The quantum environment characteristic may comprise a noise threshold or a temperature threshold.

The processor device may be further configured to: prior to altering the qubit data structure to reserve the first set of qubits, determine, based on the qubit data structure, that the first quantity of qubits is not currently available; accessing, based on the qubit data structure, time duration information that identifies a time that the first set of qubits will be available; and based on the time duration information, altering the qubit data structure to indicate that the first set of qubits is to be reserved for use by the first quantum service subsequent to use by a second quantum service.

The processor device may be further configured to determine that the first qubit reservation request identifies a time duration; and alter the qubit data structure to identify, for each qubit in the first set of qubits, the time duration.

The processor device may be further configured to receive a second qubit reservation request from a second quantum service, the second qubit reservation request identifying a second quantity of qubits; determine, based on the qubit data structure, a second set of qubits equal in number to the second quantity of qubits; alter the qubit data structure to reserve the second set of qubits for the second quantum service; and send, to the second quantum service, qubit reservation information that identifies the second set of qubits.

The first quantum service may receive the qubit reservation information; and the first quantum service may access the first set of qubits based, at least in part, on the qubit reservation information.

The processor device may be further configured to determine that the first set of qubits is to be unreserved for use by the first quantum service; alter the qubit data structure to indicate that each qubit in the first set of qubits is no longer reserved for the first quantum service; receive a second qubit reservation request from the first quantum service, the second qubit reservation request identifying a second quantity of qubits; determine, based on the qubit data structure, a second set of qubits equal in number to the second quantity of qubits; alter the qubit data structure to reserve the second set of qubits for the first quantum service; and send, to the first quantum service, qubit reservation information that identifies the second set of qubits.

According to a third aspect of the disclosure, there is provided a non-transitory computer-readable storage medium that includes executable instructions which, when executed by a processor device of a quantum computing system, cause the processor device to:
receive a first qubit reservation request from a first quantum service, the first qubit reservation request identifying a first quantity of qubits;
determine, based on a qubit data structure that identifies a first plurality of qubits, a first set of qubits equal in number to the first quantity of qubits;
alter the qubit data structure to reserve the first set of qubits for the first quantum service; and
send, to the first quantum service, qubit reservation information that identifies the first set of qubits.

The processor device may be further caused to: prior to altering the qubit data structure to reserve the first set of qubits, determine, based on the qubit data structure, that the first set of qubits is currently reserved for use by a second quantum service; and alter the qubit data structure to indicate that the first set of qubits is to be reserved for use by the first quantum service subsequent to the use by the second quantum service.

The processor device may be further caused to determine that the first set of qubits is to be unreserved for use by the second quantum service; wherein altering the qubit data structure to reserve the first set of qubits for the first quantum service is responsive to determining that the first set of qubits is to be unreserved for use by the second quantum service.

Altering the qubit data structure to reserve the first set of qubits for the first quantum service may comprise altering the qubit data structure to include a first quantum service identifier associated with the first quantum service that indicates that each qubit in the first set of qubits is reserved for use by the first quantum service.

The first plurality of qubits may be implemented by a first hardware enclosure and the quantum computing system may further comprise a second hardware enclosure that implements a second plurality of qubits.

The first plurality of qubits may comprise a first qubit type, the second plurality of qubits may comprise a second qubit type, and the first qubit type may be different from the qubit second type.

The processor device may be further caused to determine that the first qubit reservation request identifies the first qubit type; and in response to determining that the first qubit reservation request identifies the first qubit type, determine the first set of qubits from the first plurality of qubits.

The processor device may be further caused to determine that the first qubit reservation request identifies a quantum environment characteristic; and in response to determining that the first qubit reservation request identifies the quantum environment characteristic, determine the first set of qubits from the first plurality of qubits. The quantum environment characteristic may comprise a noise threshold or a temperature threshold.

The processor device may be further caused to: prior to altering the qubit data structure to reserve the first set of qubits, determine, based on the qubit data structure, that the first quantity of qubits is not currently available; accessing, based on the qubit data structure, time duration information that identifies a time that the first set of qubits will be available; and based on the time duration information, altering the qubit data structure to indicate that the first set of qubits is to be reserved for use by the first quantum service subsequent to use by a second quantum service.

The processor device may be further caused to determine that the first qubit reservation request identifies a time duration; and alter the qubit data structure to identify, for each qubit in the first set of qubits, the time duration.

The processor device may be further caused to receive a second qubit reservation request from a second quantum service, the second qubit reservation request identifying a second quantity of qubits; determine, based on the qubit data structure, a second set of qubits equal in number to the second quantity of qubits; alter the qubit data structure to reserve the second set of qubits for the second quantum service; and send, to the second quantum service, qubit reservation information that identifies the second set of qubits.

The first quantum service may receive the qubit reservation information; and the first quantum service may access the first set of qubits based, at least in part, on the qubit reservation information.

The processor device may be further caused to determine that the first set of qubits is to be unreserved for use by the first quantum service; alter the qubit data structure to indicate that each qubit in the first set of qubits is no longer reserved for the first quantum service; receive a second qubit reservation request from the first quantum service, the second qubit reservation request identifying a second quantity of qubits; determine, based on the qubit data structure, a second set of qubits equal in number to the second quantity of qubits; alter the qubit data structure to reserve the second set of qubits for the first quantum service; and send, to the first quantum service, qubit reservation information that identifies the second set of qubits.

Individuals will appreciate the scope of the disclosure and realize additional aspects thereof after reading the following detailed description of the examples in association with the accompanying drawing figures.

### BRIEF DESCRIPTION OF THE DRAWINGS

The accompanying drawing figures incorporated in and forming a part of this specification illustrate several aspects of the disclosure and, together with the description, serve to explain the principles of the disclosure.
Figure 1 is a block diagram of an environment in which sharing of qubits in a quantum computing environment may be practiced according to some implementations;
Figure 2 is a flowchart of a method for sharing of qubits in a quantum computing environment according to one implementation;
Figure 3 is a block diagram of an environment in which additional examples of sharing of qubits in a quantum computing environment may be practiced;
Figure 4 is a simplified block diagram of the environment illustrated in Figure 1 according to another implementation; and
Figure 5 is a block diagram of the quantum computing system illustrated in Figure 1 according to one example.

### DETAILED DESCRIPTION

The examples set forth below represent the information to enable individuals to practice the examples and illustrate the best mode of practicing the examples. Upon reading the following description in light of the accompanying drawing figures, individuals will understand the concepts of the disclosure and will recognize applications of these concepts not particularly addressed herein. It should be understood that these concepts and applications fall within the scope of the disclosure and the accompanying claims.

Any flowcharts discussed herein are necessarily discussed in some sequence for purposes of illustration, but unless otherwise explicitly indicated, the examples and claims are not limited to any particular sequence or order of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

Quantum computing utilizes qubits to perform quantum calculations. A quantum computing system may employ multiple quantum services that each require qubits to function. However, qubits are finite resources and, when quantum operations are executed by a quantum service, the qubits are unavailable for use by other quantum services. Accordingly, ensuring efficient sharing of qubits among multiple quantum services is increasingly important to, for example, reduce idle time and maintain system stability.

The disclosed examples implement a qubit scheduler that receives requests for qubits from a plurality of quantum services and schedules the quantum services to use the qubits in an efficient manner that reduces idle qubit time and maintains quantum system integrity. In particular, the qubit scheduler may ensure the stability of qubits within a quantum computing system by scheduling quantum services based on the requested qubit types or other criteria. Additionally, in some implementations, scheduling may also be based on characteristics related to the quantum service itself, such as execution duration or quantum environment temperature. Scheduling qubits for quantum services based on qubit characteristics and quantum service-related characteristics ensures that idle time of the qubits within the quantum computing system is minimized and qubit stability is upheld (i.e., collisions are prevented). In some implementations, the disclosed examples implement distributed use of qubits among a plurality of hardware enclosures associated with a quantum computing system. The qubit scheduler may manage multiple qubit reservation requests by scheduling the multiple qubit reservation requests across the plurality of hardware enclosures.

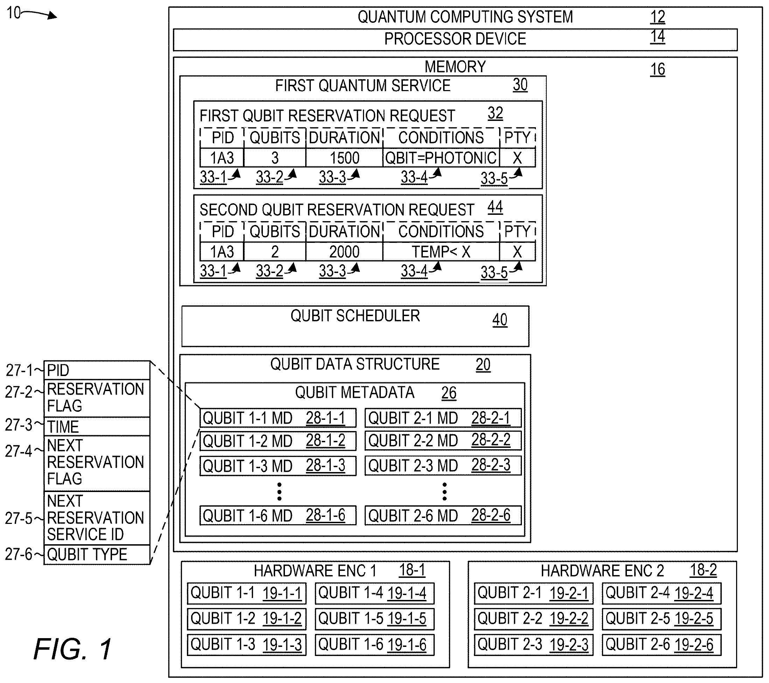

Figure 1 is a block diagram of an environment 10 in which examples may be practiced. The environment 10 includes a quantum computing system 12 with a processor device 14, memory 16, and first and second hardware enclosures 18-1 - 18-2 (generally, hardware enclosures 18). The first hardware enclosure 18-1 may implement a plurality of qubits 19-1-1 - 19-1-6 (generally, qubits 19-1). The second hardware enclosure 18-2 may implement qubits 19-2-1 - 19-2-6 (generally, qubits 19-2). The qubits 19-1 and 19-2 may be referred to generally as the qubits 19. The qubits 19-1 may be different qubit types than the qubits 19-2. While solely for purposes of illustration each of the hardware enclosures 18 implements six qubits, in practice the hardware enclosures 18 may implement any number of qubits and may implement different numbers of qubits. The qubits 19 within the first hardware enclosure 18-1 and the second hardware enclosure 18-2 may be utilized by one or more quantum programs or quantum services to carry out quantum operations. While not illustrated, each of the hardware enclosures 18 may include appropriate hardware and software, such as an operating system, suitable for implementing the qubits 19 and for running tasks and the like and for interacting with quantum services/processes executing in the memory 16 to facilitate access to the qubits 19.

The quantum computing system 12 operates in a quantum environment but can operate using classical computing principles or quantum computing principles. When using quantum computing principles, the quantum computing system 12 performs computations that utilize quantum-mechanical phenomena, such as superposition and entanglement. The quantum computing system 12 may operate under certain environmental conditions, such as at or near 0° Kelvin. When using classical computing principles, the quantum computing system 12 utilizes binary digits that have a value of either 1 or 0.

In some examples, the qubits 19-1 implemented by the first hardware enclosure 18-1 may be of a different type than the qubits 19-2 implemented by the second hardware enclosure 18-2. Additionally, the first hardware enclosure 18-1 and the second hardware enclosure 18-2 may be independent of each other. Therefore, the characteristics associated with the qubits 19-1 implemented by the first hardware enclosure 18-1 may be independent, and therefore may be different than the characteristics associated with the qubits 19-2 implemented by the second hardware enclosure 18-2.

The memory 16 may include one or more programs, services, and/or data structures that may operate using the qubits 19-1 within the first hardware enclosure 18-1 and the qubits 19-2 implemented by the second hardware enclosure 18-2. For instance, in some examples, the memory 16 may include a qubit data structure 20, a first quantum service 30, and a qubit scheduler 40.

The qubit data structure 20 may take any suitable form and/or comprise any number of data structures suitable to maintain information as described herein. In one implementation the qubit data structure 20 includes qubit metadata 26 that maintains information about each of the qubits 19. In this example the qubit metadata 26 includes a plurality of entries 28-1-1 - 28-1-6 (generally, entries 28-1), each of which corresponds to a qubit 19-1-1 - 19-1-6, respectively. The qubit metadata 26 also includes a plurality of entries 28-2-1 - 28-2-6 (generally, entries 28-2), each of which corresponds to a qubit 19-2-1 - 19-2-6, respectively. The entries 28-1 and 28-2 may be referred to as entries 28 generally. Each entry 28 may store information related to the corresponding qubit. For example, the entry 28-1-1 includes a process identifier (PID) field 27-1 that identifies a current quantum service for which the corresponding qubit 19-1-1 is currently reserved, if the qubit 19-1-1 is currently reserved. A reservation flag 27-2 indicates whether the corresponding qubit 19-1-1 is currently reserved. A time field 27-3 identifies a time duration of the current reservation of the qubit 19-1-1 (e.g., how long the quantum service identified in the PID field 27-1 will use the qubit 19-1-1).

Additionally, in some implementations, the qubit metadata 26 may include a next reservation flag 27-4 indicating that another quantum service has reserved the qubit 19-1-1 for use subsequent to the use of the qubit 19-1-1 by the quantum service that is currently using the qubit 19-1-1. A next reservation service ID field 27-5 identifies the quantum service that has next reserved the qubit 19-1-1. The qubit metadata 26 may include a qubit type field 27-6 that identifies a qubit type of the qubit 19-1-1 (e.g., superconducting, photonic, neutral atom, trapped ion, quantum dot).

The qubit scheduler 40, in response to a request, alters the qubit data structure 20 to reflect a reservation of a qubit 19. For instance, the qubit scheduler 40 may update an entry 28 to reserve the corresponding qubit 19 for a quantum service.

A quantum service, such as the first quantum service 30, can be any of a variety of different quantum applications, algorithms, processes or tasks. The first quantum service 30 may generate and send a first qubit reservation request 32 to the qubit scheduler 40 to reserve one or more qubits 19 for use by the first quantum service 30. In this example the first qubit reservation request 32 includes a PID field 33-1 that identifies the PID of the first quantum service 30 and a qubit quantity field 33-2 that identifies a quantity of qubits to be reserved. The first qubit reservation request 32 may include a duration field 33-3 that identifies a time duration of the reservation, after which the reserved qubit 19 can be reserved by another quantum service. The first qubit reservation request 32 may identify a quantum environment characteristic. For instance, the first qubit reservation request 32 may include a conditions field 33-4 that identifies one or more quantum environment characteristics associated with the reservation. By way of non-limiting example, the conditions field 33-4 may identify a temperature threshold that identifies a maximum desired quantum environment temperature. As another example, the conditions field 33-4 may identify a noise threshold that identifies a maximum quantum environment noise level. The conditions field 33-4 may identify a particular qubit type. The first qubit reservation request 32 may include a priority field 33-5 that identifies a priority of the request.

The qubit scheduler 40 receives the first qubit reservation request 32. In this example assume that the field 33-2 identifies a quantity of qubits 19, in this example, three qubits 19. The field 33-3 identifies a duration of 1500 milliseconds. The field 33-4 identifies a qubit type, such as a photonic qubit type. The qubit scheduler 40 determines that the hardware enclosure 18-1 implements photonic qubits and thus analyzes the entries 28-1-1 - 28-1-6. The qubit scheduler 40 determines, based on the qubit data structure 20, a set of qubits 19 equal in number to the first quantity of qubits. In this example, the qubit scheduler 40 determines that the qubits 19-1-1 - 19-1-3 are available, and thus the set of qubits comprises the qubits 19-1-1 - 19-1-3. The qubit scheduler 40 alters the qubit data structure 20 to reserve the first set of qubits 19-1-1 - 19-1-3 for the first quantum service 30. In particular, the qubit scheduler 40 alters the PID field 27-1 of the entries 28-1-1, 28-1-2 and 28-1-3 to include the quantum service identifier of the first quantum service 30 to indicate that the qubits 19-1-1 - 19-1-3 are reserved for use by the first quantum service 30. The qubit scheduler 40 also alters the reservation flag 27-2 of the entries 28-1-1, 28-1-2 and 28-1-3 to indicate that each of the qubits 19-1-1 - 19-1-3 are reserved for use by a quantum service. The qubit scheduler 40 alters the time field 27-3 of the entries 28-1-1, 28-1-2 and 28-1-3 to indicate that the qubits 19-1-1 - 19-1-3 are reserved for 1500 milliseconds.

The qubit scheduler 40 sends, to the first quantum service 30, qubit reservation information that identifies the first set of qubits 19-1-1 - 19-1-3. The qubit reservation information may include address information or other suitable information that informs the first quantum service 30 how to access the first set of qubits 19-1-1 - 19-1-3. Such information may identify the first hardware enclosure 18-1 and identify the specific qubits 19-1-1 - 19-1-3. The qubit reservation information may also indicate that the qubits 19-1-1 - 19-1-3 are available immediately and for a designated period of time. The designated period of time may be equal to the time duration identified in the duration field 33-3 of the first qubit reservation request 32.

The first quantum service 30 receives the qubit reservation information and interfaces with the first hardware enclosure 18-1 to access the qubits 19-1-1 - 19-1-3. The particular interface mechanism may differ depending on the system design, but may involve any suitable inter-process communication mechanism, such as a pipe, an application programming interface, a proprietary or conventional messaging protocol, or the like.

Subsequently the qubit scheduler 40 may determine that the first set of qubits 19-1-1 - 19-1-3 are to be unreserved for use by the first quantum service 30. In one implementation, upon sending the qubit reservation information to the first quantum service 30 the qubit scheduler 40 may set a timer to the designated period of time identified in the qubit reservation information sent to the first quantum service 30. Upon expiration of the timer, the qubit scheduler 40 may determine that the first set of qubits 19-1-1 - 19-1-3 are to be unreserved for use by the first quantum service 30. In other examples, the qubit scheduler 40 may receive a confirmation from the first quantum service 30 that the first quantum service 30 is no longer using the set of qubits 19-1-1 - 19-1-3. In response to determining that the qubits 19-1-1 - 19-1-3 are to be unreserved for use by the first quantum service 30, the qubit scheduler 40 alters the qubit data structure 20 to indicate the qubits 19-1-1 - 19-1-3 are no longer reserved for use by the first quantum service 30.

Assume subsequently that the first quantum service 30 generates and sends a second qubit reservation request 44 to the qubit scheduler 40 to reserve one or more qubits 19 for use by the first quantum service 30. In this example the second qubit reservation request 44 includes the PID field 33-1 that identifies the PID of the first quantum service 30 and the qubit quantity field 33-2 that identifies a quantity of qubits to be reserved, in this example, two qubits. The second qubit reservation request 44 includes the duration field 33-3 that identifies a time duration of the reservation, in this example 2000 milliseconds, after which the reserved qubits 19 can be reserved by another quantum service. In this example the conditions field 33-4 identifies a quantum environment characteristic. In particular, the conditions field 33-4 indicates that the qubits 19 to be reserved should be in a quantum environment that has a temperature below an identified temperature threshold X.

The qubit scheduler 40 receives the second qubit reservation request 44. The qubit scheduler 40 communicates with the first hardware enclosure 18-1 to obtain a current quantum environment temperature. The first hardware enclosure 18-1 responds with a current quantum environment temperature. The qubit scheduler 40 determines that the current quantum environment temperature is greater than the temperature threshold X identified in the conditions field 33-4. Because the second qubit reservation request 44 does not identify a particular qubit type, the qubit scheduler 40 communicates with the second hardware enclosure 18-2 to obtain a current quantum environment temperature. The second hardware enclosure 18-2 responds with a current quantum environment temperature. The qubit scheduler 40 determines that the current quantum environment temperature is less than the temperature threshold X identified in the conditions field 33-4.

In response to determining that the quantum environment temperature of the second hardware enclosure 18-2 is less than the temperature threshold X, the qubit scheduler 40 accesses the entries 28-2-1 - 28-2-6 of the qubit data structure 20. The qubit scheduler 40 determines a set of qubits 19 equal in number to the requested quantity of qubits 19, in this example, two. In this example, the qubit scheduler 40 determines that the qubits 19-2-1 - 19-2-2 are available, and thus the set of qubits comprises the qubits 19-2-1 - 19-2-2. The qubit scheduler 40 alters the qubit data structure 20 to reserve the set of qubits for the first quantum service 30. In particular, the qubit scheduler 40 alters the PID field 27-1 of the entries 28-2-1 and 28-2-2 to include the quantum service identifier of first quantum service 30 to indicate that the qubits 19-2-1 - 19-2-2 are reserved for use by the first quantum service 30. The qubit scheduler 40 also alters the reservation flag 27-2 of the entries 28-2-1 and 28-2-2 to indicate that each of the qubits 19-2-1 - 19-2-2 are reserved for use by a quantum service. The qubit scheduler 40 alters the time field 27-3 of the entries 28-2-1 and 28-2-2 to indicate that the qubits 19-2-1 - 19-2-2 are reserved for 2000 milliseconds.

The qubit scheduler 40 sends, to the first quantum service 30, qubit reservation information that identifies the set of qubits 19-2-1 - 19-2-2. The qubit reservation information may include address information or other suitable information that informs the first quantum service 30 how to access the set of qubits 19-2-1 - 19-2-2. Such information may identify second hardware enclosure 18-2 and identify the specific qubits 19-2-1 - 19-2-2. The qubit reservation information may also indicate that the qubits 19-2-1 - 19-2-2 are available immediately and for a designated period of time. The designated period of time may be equal to the time duration identified in the duration field 33-3 of the second qubit reservation request 44. The first quantum service 30 receives the qubit reservation information and interfaces with the second hardware enclosure 18-2 to access the qubits 19-2-1 - 19-2-2.

It is noted that, because the qubit scheduler 40 is a component of the quantum computing system 12, functionality implemented by the qubit scheduler 40 may be attributed to the quantum computing system 12 generally. Moreover, in examples where the qubit scheduler 40 comprises software instructions that program the processor device 14 to carry out functionality discussed herein, functionality implemented by the qubit scheduler 40 may be attributed herein to the processor device 14.

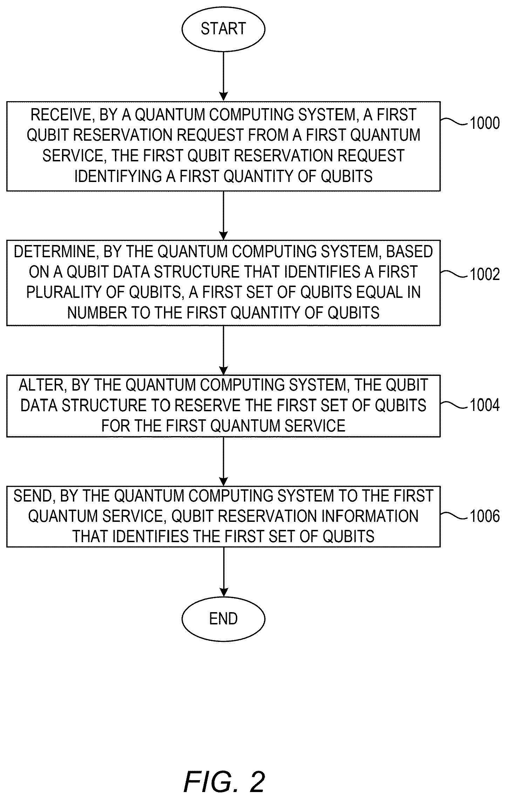

Figure 2 is a flowchart of a method for sharing of qubits in a quantum computing environment according to one implementation. Figure 2 will be discussed in conjunction with Figure 1. The quantum computing system 12 receives the first qubit reservation request 32 from the first quantum service 30, the first qubit reservation request 32 identifying a first quantity of qubits 19-1, in this example, three qubits 19-1 (Figure 2, block 1000). The quantum computing system 12 determines, based on the qubit data structure 20 that identifies the first plurality of qubits 19-1-1 - 19-1-6, a first set of qubits 19-1 - 19-3 equal in number to the first quantity of qubits (Figure 2, block 1002). The quantum computing system 12 alters the qubit data structure 20 to reserve the first set of qubits 19-1 - 19-3 for the first quantum service 30 (Figure 2, block 1004). The quantum computing system 12 sends, to the first quantum service 30, qubit reservation information that identifies the first set of qubits 19-1 - 19-3 (Figure 2, block 1006).

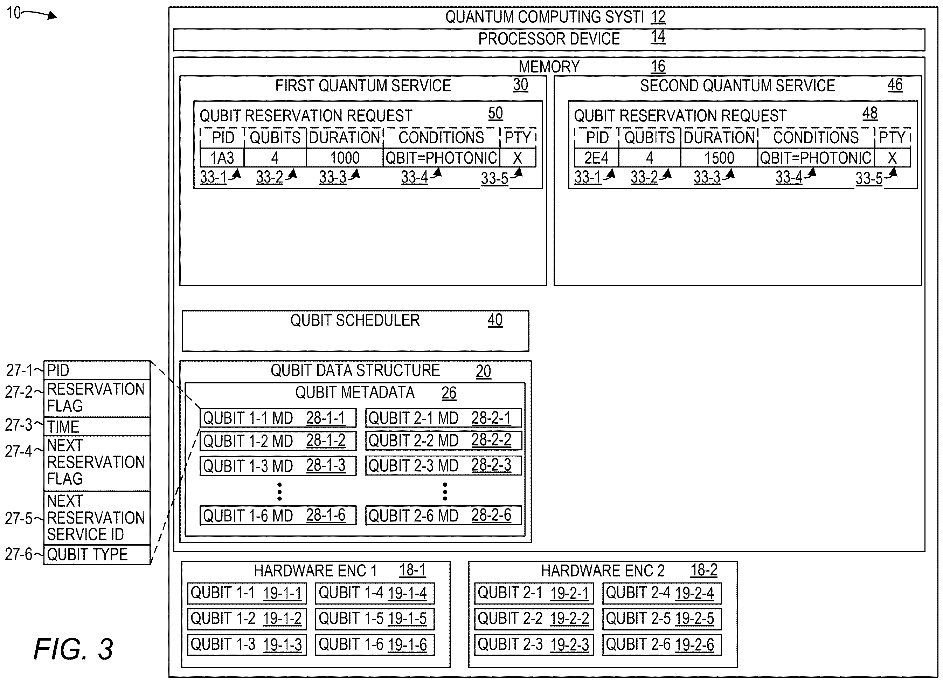

Figure 3 is a block diagram of the environment 10 illustrated in Figure 1 according to additional examples. In this example a second quantum service 46 generates and sends a qubit reservation request 48 to the qubit scheduler 40 to reserve one or more qubits 19 for use by the second quantum service 46. The qubit reservation request 48 includes the PID field 33-1 that identifies the PID of the second quantum service 46 and the qubit quantity field 33-2 that identifies a quantity of qubits to be reserved, in this example, four qubits. The qubit reservation request 48 includes the duration field 33-3 that identifies a time duration of the reservation, in this example 2000 milliseconds, after which the reserved qubits 19 can be reserved by another quantum service. In this example the conditions field 33-4 identifies a qubit type, such as a photonic qubit type.

The qubit scheduler 40 receives the qubit reservation request 48. The qubit scheduler 40 determines that the hardware enclosure 18-1 implements photonic qubits and thus analyzes the entries 28-1-1 - 28-1-6. The qubit scheduler 40 determines, based on the qubit data structure 20, a set of qubits 19 equal in number to the first quantity of qubits. In this example, the qubit scheduler 40 determines that the qubits 19-1-1 - 19-1-4 are available, and thus the set of qubits comprises the qubits 19-1-1 - 19-1-4. The qubit scheduler 40 alters the qubit data structure 20 to reserve the first set of qubits for the second quantum service 46. In particular, the qubit scheduler 40 alters the PID field 27-1 of the entries 28-1-1 - 28-1-4 to include the quantum service identifier of the second quantum service 46 to indicate that the qubits 19-1-1 - 19-1-4 are reserved for use by the second quantum service 46. The qubit scheduler 40 also alters the reservation flag 27-2 of the entries 28-1-1 - 28-1-4 to indicate that each of the qubits 19-1-1 - 19-1-4 are reserved for use by a quantum service. The qubit scheduler 40 alters the time field 27-3 of the entries 28-1-1 - 28-1-4 to indicate that the qubits 19-1-1 - 19-1-4 are reserved for 2000 milliseconds.

The qubit scheduler 40 sends, to the second quantum service 46, qubit reservation information that identifies the set of qubits 19-1-1 - 19-1-4. The qubit reservation information may include address information or other suitable information that informs the second quantum service 46 how to access the set of qubits 19-1-1 - 19-1-4. Such information may identify the first hardware enclosure 18-1 and identify the specific qubits 19-1-1 - 19-1-4. The qubit reservation information may also indicate that the qubits 19-1-1 - 19-1-4 are available immediately and for a designated period of time. The designated period of time may be equal to the time duration identified in the duration field 33-3 of the qubit reservation request 48. The qubit scheduler 40 sets a timer associated with the entries 28-1-1 - 28-1-4 for 2000 milliseconds.

Assume now that, during the period of time during which the qubits 19-1-1 - 19-1-4 are reserved, the first quantum service 30 generates and sends a qubit reservation request 50 to the qubit scheduler 40 to reserve one or more qubits 19 for use by the first quantum service 30. The qubit reservation request 50 includes the PID field 33-1 that identifies the PID of the first quantum service 30 and the qubit quantity field 33-2 that identifies a quantity of qubits to be reserved, in this example, four qubits. The qubit reservation request 50 includes the duration field 33-3 that identifies a time duration of the reservation, in this example 1000 milliseconds, after which the reserved qubits 19 can be reserved by another quantum service. In this example the conditions field 33-4 identifies a qubit type, such as a photonic qubit type.

The qubit scheduler 40 receives the qubit reservation request 50. The qubit scheduler 40 determines that the hardware enclosure 18-1 implements photonic qubits and thus analyzes the entries 28-1-1 - 28-1-6. The qubit scheduler 40 determines, based on the qubit data structure 20, that all the qubits 19-1-1 - 19-1-6 are currently reserved for use. The qubit scheduler 40 determines, based on the time field 27-3 of the entries 28-1-1 - 28-1-6 that the qubits 19-1-1 - 19-1-4 will become available sooner than the qubits 19-1-5 - 19-1-6. The qubit scheduler 40 alters the qubit data structure 20 to indicate that the set of qubits 19-1-1 - 19-1-4 are to be reserved for use by the first quantum service 30 subsequent to the use by the second quantum service 46. In particular, the qubit scheduler 40 alters the next reservation flag 27-4 of the entries 28-1-1 - 28-1-4 to indicate that a quantum service has reserved the qubits 19-1-1 - 19-1-4 for use subsequent to the use of the qubits 19-1-1 - 19-1-4 by the second quantum service 46. The qubit scheduler 40 alters the next reservation service ID field 27-5 of the entries 28-1-1 - 28-1-4 to identify the first quantum service 30.

The timer associated with the entries 28-1-1 - 28-1-4 expires. In response to the expiration of the time, the qubit scheduler 40 unreserves the qubits 19-1-1 - 19-1-4 for use by the second quantum service 46 and reserves the qubits 19-1-1 - 19-1-4 for use by the first quantum service 30.

In particular, the qubit scheduler 40 alters the PID field 27-1 of the entries 28-1-1 - 28-1-4 to include the quantum service identifier of the first quantum service 30 to indicate that the qubits 19-1-1 - 19-1-4 are reserved for use by the first quantum service 30. The qubit scheduler 40 also alters the reservation flag 27-2 of the entries 28-1-1 - 28-1-4 to indicate that each of the qubits 19-1-1 - 19-1-4 are reserved for use by a quantum service. The qubit scheduler 40 alters the time field 27-3 of the entries 28-1-1 - 28-1-4 to indicate that the qubits 19-1-1 - 19-1-4 are reserved for 1000 milliseconds. The qubit scheduler 40 nulls the fields 27-4 - 27-6.

The qubit scheduler 40 sends, to the first quantum service 30, qubit reservation information that identifies the set of qubits 19-1-1 - 19-1-4. The qubit reservation information may include address information or other suitable information that informs the first quantum service 30 how to access the set of qubits 19-1-1 - 19-1-4. Such information may identify the first hardware enclosure 18-1 and identify the specific qubits 19-1-1 - 19-1-4. The qubit reservation information may also indicate that the qubits 19-1-1 - 19-1-4 are available immediately and for a designated period of time. The designated period of time may be equal to the time duration identified in the duration field 33-3 of the qubit reservation request 50. The qubit scheduler 40 sets a timer associated with the entries 28-1-1 - 28-1-4 for 1000 milliseconds.

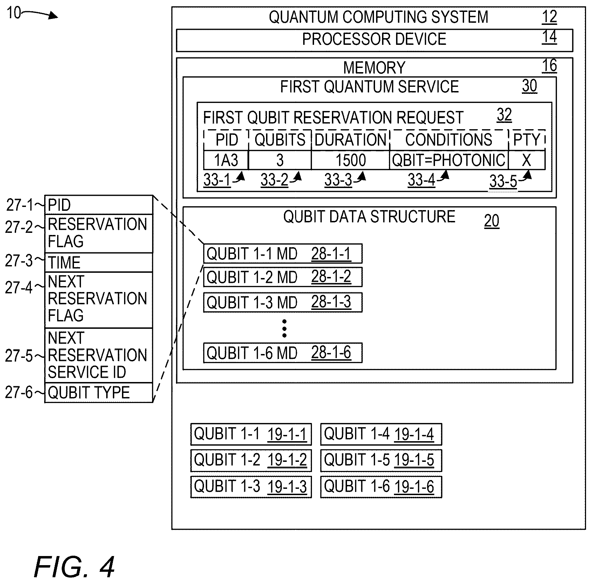

Figure 4 is a simplified block diagram of the environment 10 illustrated in Figure 1 according to another implementation. The environment 10 includes the quantum computing system 12 that includes the memory 16, and the processor device 14 coupled to the memory 16 to receive the first qubit reservation request 32 from the first quantum service 30, the first qubit reservation request 32 identifying a first quantity of qubits. The processor device 14 is further to determine, based on the qubit data structure 20 that identifies the first plurality of qubits 19-1-1 - 19-1-6, a first set of qubits equal in number to the first quantity of qubits. The processor device 14 is further to alter the qubit data structure 20 to reserve the first set of qubits for the first quantum service 30. The processor device 14 is further to send, to the first quantum service 30, qubit reservation information that identifies the first set of qubits.

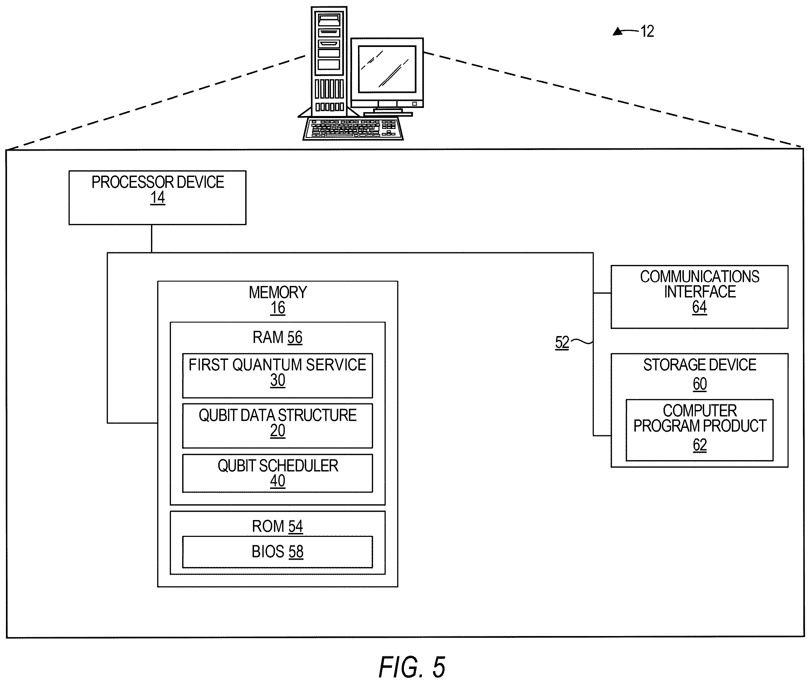

Figure 5 is a block diagram of the quantum computing system 12 suitable for implementing examples according to one example. The quantum computing system 12 may comprise any computing or electronic device capable of including firmware, hardware, and/or executing software instructions to implement the functionality described herein. The quantum computing system 12 includes the processor device 14, the system memory 16, and a system bus 52. The system bus 52 provides an interface for system components including, but not limited to, the system memory 16 and the processor device 14. The processor device 14 can be any commercially available or proprietary processor.

The system bus 52 may be any of several types of bus structures that may further interconnect to a memory bus (with or without a memory controller), a peripheral bus, and/or a local bus using any of a variety of commercially available bus architectures. The system memory 16 may include non-volatile memory 54 (e.g., read-only memory (ROM), erasable programmable read-only memory (EPROM), electrically erasable programmable read-only memory (EEPROM), etc.), and volatile memory 56 (e.g., random-access memory (RAM)). A basic input/output system (BIOS) 58 may be stored in the non-volatile memory 54 and can include the basic routines that help to transfer information between elements within the quantum computing system 12. The volatile memory 56 may also include a high-speed RAM, such as static RAM, for caching data.

The quantum computing system 12 may further include or be coupled to a non-transitory computer-readable storage medium such as the storage device 60, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 60 and other drives associated with computer-readable media and computer-usable media may provide non-volatile storage of data, data structures, computer-executable instructions, and the like.

A number of modules can be stored in the storage device 60 and in the volatile memory 56, including an operating system and one or more program modules, such as the qubit scheduler 40, which may implement the functionality described herein in whole or in part. All or a portion of the examples may be implemented as a computer program product 62 stored on a transitory or non-transitory computer-usable or computer-readable storage medium, such as the storage device 60, which includes complex programming instructions, such as complex computer-readable program code, to cause the processor device 14 to carry out the steps described herein. Thus, the computer-readable program code can comprise software instructions for implementing the functionality of the examples described herein when executed on the processor device 14. The processor device 14, in conjunction with the qubit scheduler 40 in the volatile memory 56, may serve as a controller, or control system, for the quantum computing system 12 that is to implement the functionality described herein.

The quantum computing system 12 may also include a communications interface 64, such as an Ethernet transceiver and/or a Wi-Fi transceiver, or the like, suitable for communicating with a network as appropriate or desired.

Individuals will recognize improvements and modifications to the preferred examples of the disclosure. All such improvements and modifications are considered within the scope of the concepts disclosed herein and the claims that follow.

## Claims

1. A method, comprising:
receiving, by a quantum computing system that implements a first plurality of qubits, a first qubit reservation request from a first quantum service, the first qubit reservation request identifying a first quantity of qubits;
determining, by the quantum computing system, based on a qubit data structure that identifies the first plurality of qubits, a first set of qubits equal in number to the first quantity of qubits;
altering, by the quantum computing system, the qubit data structure to reserve the first set of qubits for the first quantum service; and
sending, by the quantum computing system to the first quantum service, qubit reservation information that identifies the first set of qubits.

2. The method of claim 1, further comprising:
prior to altering the qubit data structure to reserve the first set of qubits, determining, by the quantum computing system, based on the qubit data structure, that the first set of qubits is currently reserved for use by a second quantum service; and
altering, by the quantum computing system, the qubit data structure to indicate that the first set of qubits is to be reserved for use by the first quantum service subsequent to the use by the second quantum service.

3. The method of claim 2, further comprising:
determining, by the quantum computing system, that the first set of qubits is to be unreserved for use by the second quantum service;
wherein altering the qubit data structure to reserve the first set of qubits for the first quantum service is responsive to determining that the first set of qubits is to be unreserved for use by the second quantum service.

4. The method of claim 1, wherein altering the qubit data structure to reserve the first set of qubits for the first quantum service comprises altering, by the quantum computing system, the qubit data structure to include a first quantum service identifier associated with the first quantum service that indicates that each qubit in the first set of qubits is reserved for use by the first quantum service.

5. The method of claim 1, wherein the first plurality of qubits is implemented by a first hardware enclosure and the quantum computing system further comprises a second hardware enclosure that implements a second plurality of qubits.

6. The method of claim 5, wherein the first plurality of qubits comprises a first qubit type, the second plurality of qubits comprises a second qubit type, and the first qubit type is different from the qubit second type.

7. The method of claim 6, further comprising:
determining, by the quantum computing system, that the first qubit reservation request identifies the first qubit type; and
in response to determining that the first qubit reservation request identifies the first qubit type, determining the first set of qubits from the first plurality of qubits.

8. The method of claim 5, further comprising:
determining, by the quantum computing system, that the first qubit reservation request identifies a quantum environment characteristic; and
in response to determining that the first qubit reservation request identifies the quantum environment characteristic, determining the first set of qubits from the first plurality of qubits;
optionally wherein the quantum environment characteristic comprises a noise threshold or a temperature threshold.

9. The method of claim 1, further comprising:
prior to altering the qubit data structure to reserve the first set of qubits, determining, by the quantum computing system based on the qubit data structure, that the first quantity of qubits is not currently available;
accessing, by the quantum computing system based on the qubit data structure, time duration information that identifies a time that the first set of qubits will be available; and
based on the time duration information, altering, by the quantum computing system, the qubit data structure to indicate that the first set of qubits is to be reserved for use by the first quantum service subsequent to use by a second quantum service.

10. The method of claim 1, further comprising:
determining, by the quantum computing system, that the first qubit reservation request identifies a time duration; and
altering, by the quantum computing system, the qubit data structure to identify, for each qubit in the first set of qubits, the time duration.

11. The method of claim 1, further comprising:
receiving, by the quantum computing system, a second qubit reservation request from a second quantum service, the second qubit reservation request identifying a second quantity of qubits;
determining, by the quantum computing system, based on the qubit data structure, a second set of qubits equal in number to the second quantity of qubits;
altering, by the quantum computing system, the qubit data structure to reserve the second set of qubits for the second quantum service; and
sending, by the quantum computing system to the second quantum service, qubit reservation information that identifies the second set of qubits.

12. The method of claim 1, further comprising:
receiving, by the first quantum service, the qubit reservation information; and
accessing, by the first quantum service, the first set of qubits based, at least in part, on the qubit reservation information.

13. The method of claim 1, further comprising:
determining, by the quantum computing system, that the first set of qubits is to be unreserved for use by the first quantum service;
altering, by the quantum computing system, the qubit data structure to indicate that each qubit in the first set of qubits is no longer reserved for the first quantum service;
receiving, by the quantum computing system, a second qubit reservation request from the first quantum service, the second qubit reservation request identifying a second quantity of qubits;
determining, by the quantum computing system, based on the qubit data structure, a second set of qubits equal in number to the second quantity of qubits;
altering, by the quantum computing system, the qubit data structure to reserve the second set of qubits for the first quantum service; and
sending, by the quantum computing system to the first quantum service, qubit reservation information that identifies the second set of qubits.

14. A quantum computing system, comprising:
a memory; and
a processor device coupled to the memory, configured to carry out the method of any of claims 1 to 13.

15. A non-transitory computer-readable storage medium that includes executable instructions which, when executed by a processor device of a quantum computing system, cause the processor device to carry out the method of any of claims 1 to 13.
